(19) Europäisches Patentamt
European Patent Office
Office européen des brevets

(11) EP 0 590 392 B1

(12) EUROPÄISCHE PATENTSCHRIFT

(45) Veröffentlichungstag und Bekanntmachung des Hinweises auf die Patenterteilung:
**04.06.1997 Patentblatt 1997/23**

(51) Int Cl.[6]: **C08G 65/40**, C08L 71/00, C08L 81/06, C08L 77/00

(21) Anmeldenummer: **93114622.9**

(22) Anmeldetag: **11.09.1993**

(54) **Formmassen auf der Basis von Polyarylethern und schlagzähmodifizierten teilaromatischen Copolyamiden**

Moulding masses based on polyarylethers and impact resistant modified partly aromatic copolyamides

Masses à mouler à base de polyaryléthers et de copolyamides partiellement aromatiques modifiés résistants aux chocs

(84) Benannte Vertragsstaaten:
**BE CH DE FR GB IT LI NL**

(30) Priorität: **23.09.1992 DE 4231811**
**14.10.1992 DE 4234602**

(43) Veröffentlichungstag der Anmeldung:
**06.04.1994 Patentblatt 1994/14**

(73) Patentinhaber: **BASF Aktiengesellschaft**
**67063 Ludwigshafen (DE)**

(72) Erfinder:
- **Weber, Martin, Dr.**
  **D-6730 Neustadt (DE)**
- **Muehlbach, Klaus, Dr.**
  **D-6718 Gruenstadt (DE)**

(56) Entgegenhaltungen:
**EP-A- 0 270 998**
**EP-A- 0 327 979**
**EP-A- 0 477 757**
**EP-A- 0 522 307**
**US-A- 3 729 527**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 590 392 B1

Printed by Jouve, 75001 PARIS (FR)

**Beschreibung**

Die vorliegende Erfindung betrifft Formmassen, die aus

A) 5 bis 95 Gew.-% Polyarylether (A) mit wiederholten Strukturelementen

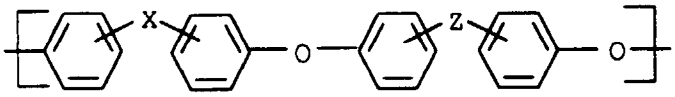 (I)

oder deren kernsubstituierten $C_1$- bis $C_6$-Alkyl-, $C_1$- bis $C_6$-Alkoxy-, Aryl-, Chlor- oder Fluorderivaten, wobei

X -$SO_2$-, -SO-, -S-, -O-, -CO-, -N=N-, -RC=$CR^a$-, -$CR^bR^c$- oder eine chemische Bindung sein kann und

Z ausgewählt ist aus -$SO_2$-, -SO-, -CO-, -N=N- und -RC=$CR^a$- , wobei

R und $R^a$ jeweils Wasserstoff oder eine $C_1$- bis $C_6$-Alkylgruppe darstellen,

$R^b$ und $R^c$ jeweils Wasserstoff oder eine $C_1$- bis $C_6$-Alkyl-, $C_4$- bis $C_{10}$-Cycloalkyl-, $C_1$- bis $C_6$-Alkoxy- oder Arylgruppe oder jeweils deren Fluor- oder Chlorderivate sein können und

B) 5 bis 95 Gew.-% einer Schmelzkompoundierten Mischung (B) aus

$B_I$) 75 bis 97 Gew.-% teilaromatischer Polyamide mit einem Triamingehalt von weniger als 0,5 Gew.-% und

$B_{II}$) 3 bis 25 Gew.-% schlagzähmodifizierender Polymerer

sowie darüber hinaus

C) 0 bis 40 Gew.-% Zusatzstoffe und/oder Verarbeitungshilfsmittel

aufgebaut sind.

Darüber hinaus betrifft die Erfindung die Verwendung dieser Formmassen zur Herstellung von Formkörpern, Folien oder Fasern, sowie Formkörper, Folien oder Fasern, die unter Verwendung der Formmassen als wesentlichen Komponenten erhältlich sind.

Mischungen aus Polysulfonen und aromatischen und/oder aliphatischen Polyamiden sind aus der DE 21 22 735 und der nicht vorveröffentlichten deutschen Patentanmeldung Nr. 4 121 705.5 (EP-A-522 307) bekannt. Weiterhin war bekannt, daß derartige Mischungen elastomere Materialien wie Ethylencopolymere enthalten können, wodurch die daraus hergestellten Gegenstände zäher werden. Die Zähigkeit dieser Mischungen genügt jedoch vielen Anforderungen nicht. Darüber hinaus weisen sie eine zu niedrige Steifigkeit auf.

Aufgabe der vorliegenden Erfindung war es deshalb, Formmassen auf der Basis von Polyarylethern und Polyamiden zu entwickeln, die neben hoher Wärmeformbeständigkeit und hoher Zähigkeit auch hohe Steifigkeit aufweisen.

Es wurde gefunden, daß die eingangs definierten Formmassen auf der Basis von Polyarylethern und schlagzähmodifizierten teilaromatischen Polyamiden das gewünschte Eigenschaftsspektrum zeigen.

Komponente A

Die erfindungsgemäßen Formmassen sind aufgebaut aus 5 bis 95 Gew.-% der Komponente A. Besonders bevorzugt werden Formmassen, die 15 bis 85 Gew.-% dieser Komponente enthalten.

Als Komponente A werden Polyarylether mit wiederholten Strukturelementen

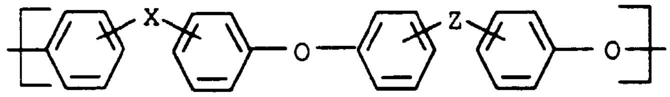

(I)

eingesetzt. Ebenso können deren kernsubstituierte Derivate verwendet werden. Als Substituenten kommen vorzugsweise $C_1$-$C_6$-Alkyl, wie Methyl, Ethyl oder t-Butyl, $C_1$-$C_6$-Alkoxy, wie Methoxy oder Ethoxy, Aryl, insbesondere Phenyl, Chlor oder Fluor in Betracht. Die Variable X kann $-SO_2-$, -SO-, -S-, -O-, -CO-,-N=N-, $-RC=CR^a-$, $-CR^bR^c-$ oder eine chemische Bindung sein. Die Variable Z kann für $-SO_2-$, -SO-, -N=N- und $-RC=CR^a-$, stehen. Hierbei stellen R und $R^a$ jeweils Wasserstoff, $C_1$-$C_6$-Alkyl, z.B. Methyl, n-Propyl oder n-Hexyl, $C_1$-$C_6$-Alkoxy, darunter Methoxy, Ethoxy, oder Butoxy, oder Aryl, insbesondere Phenyl dar. Die Reste $R^b$ und $R^c$ können jeweils Wasserstoff oder eine $C_1$- bis $C_6$-Alkylgruppe, insbesondere Methyl, darstellen. Sie können aber auch zu einem $C_4$- bis $C_{10}$-Cycloalkylring miteinander verknüpft sein, der seinerseits mit einer oder mehreren Alkylgruppen, vorzugsweise Methyl substituiert sein kann. Daneben können $R^b$ und $R^c$ auch eine $C_1$- bis $C_6$-Alkoxygruppe, z.B. Methoxy oder Ethoxy oder eine Arylgruppe, besonders Phenyl, darstellen. Die vorgenannten Gruppen können ihrerseits jeweils mit Chlor oder Fluor substituiert sein.

Die Polyarylether können beliebige Endgruppen, wie Halogen-, Methoxy-, Hydroxy-, Phenoxy-, Benzyloxy- oder Aminoendgruppen enthalten.

Die Molekulargewichte (Zahlenmittel $\bar{M}_n$) geeigneter Polyarylether A liegen im allgemeinen im Bereich von 1500 bis 60 000 g/mol.

Zu den geeigneten Polyarylethern A zählen auch Copolymere aufgebaut aus Polyarylethersegmenten und Struktureinheiten ausgewählt aus der Gruppe der Polyester, aromatischen Polycarbonate, Polyestercarbonate, Polysiloxane, Polyimide, Polyamidimide und Polyetherimide. Die Molekulargewichte der Polyaryletherblöcke bzw. der Polyaryletherpfropfarme in derartigen Copolymeren liegen im allgemeinen im Bereich von 1000-30000 g/mol. Die Blöcke unterschiedlicher Struktur können in den Copolymeren alternierend oder statistisch angeordnet sein. Der Gewichtsanteil der Polyarylether in den Copolymeren beträgt im allgemeinen 3 bis 97, vorzugsweise 10 bis 90 und insbesondere 20 bis 80 Gew.-%.

Zu den besonders bevorzugten Polyarylethern A zählen solche mit

$a_1$) 3 bis 97 Mol-% wiederkehrenden Einheiten

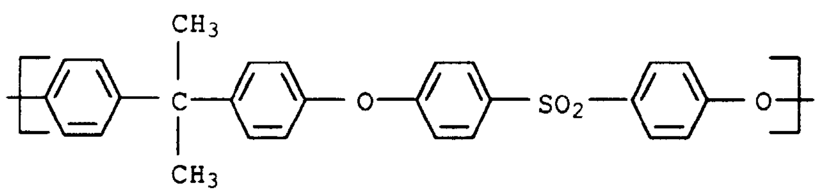

(II)

und

$a_2$) 3 bis 97 Mol-% wiederkehrenden Einheiten

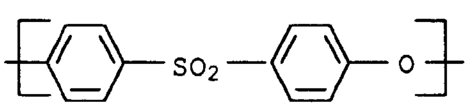

(III),

insbesondere solche mit 5 bis 95 Mol-% Einheiten II und 5 bis 95 Mol-% Einheiten III,

wobei sich die Molprozentangabe auf den Gehalt an $SO_2$-Gruppen bezieht.

Es können auch Mischungen verschiedener Polyarylether A verwendet werden.

Darunter sind solche Mischungen bevorzugt, die als Komponente $A_I$ Polyarylether die Aminoendgruppen enthalten

und als Komponente $A_I$ Polyarylether mit Endgruppen, die nicht Aminogruppen gruppen sind, enthalten. Dabei können die Aminoendgruppen enthaltenden Polyarylether zu 0,5 bis 50 Gew.-%, bevorzugt 1 bis 30 Gew.-%, bezogen auf den Gesamtpolyarylethergehalt, in den Mischungen enthalten sein. Insbesondere werden Mischungen aus 2 bis 15 Gew.-% Polyarylethern $A_I$ und 85 bis 98 Gew.-% Polyarylethern $A_{II}$ bevorzugt.

Die Polyarylether $A_I$ können sowohl $NH_2$-Gruppen als Endgruppen enthalten als auch alkyl- oder arylsubstituierte, sowie dialkyl- oder diarylsubstituierte Aminogruppen, worunter $C_1$- bis $C_5$-Alkylamino wie Methylamino, Ethylamino- oder n-Propylamino oder Phenylaminogruppen bevorzugt sind. Ganz besonders bevorzugte Aminoendgruppe ist $NH_2$-. Im allgemeinen haben die Polyarylether $A_I$ 0,05 bis 1 Gew.-% Aminoendgruppen, bezogen auf alle Endgruppen. Er kann aber auch darunter oder darüber liegen, beispielsweise 0,03 bis 2 Gew.-%. Aminoendgruppengehalte von weniger als 0,01 oder mehr als 5 Gew.-% bringen im allgemeinen keine Vorteile.

Die Herstellung der Polyarylether A ist allgemein bekannt (vgl. z.B. GB 1 152 035; US 4 870 153; WO 84 03891), ebenso die Herstellung von Polyarylethern mit Blockstruktur (DE 37 42 264). Methoden zur Synthese von Copolymeren sind z.B. bei A. Noshay et al. Block Copolymers, Academic Press, 1977, beschrieben.

Geeignete Verfahrensbedingungen zur Synthese von Polyarylethern sind beispielsweise in den EP-A 113 112 und 135 130 beschrieben.

Besonders geeignet ist die Umsetzung von monomeren Dihydroxy- mit Dihalogenverbindungen in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Base oder die Umsetzung in der Schmelze. Daneben eignet sich die Umsetzung von Säurechloriden mit aromatischen Verbindungen mit abstrahierbaren Wasserstoffatomen in Gegenwart von Lewissäuren wie Aluminiumtrichlorid.

Die Herstellung von Polyarylethern mit unterschiedlichen Endgruppen ist ebenfalls an sich bekannt. So ist die Synthese von Aminoendgruppen enthaltenden Polyarylethern z.B. in J.E. Mc Grath et al: Polymer 30, 1552 (1989) beschrieben. Beispielsweise lassen sich Polyarylether mit Phenylaminoendgruppen dadurch herstellen, daß p-Aminophenol während der Polymerisation zur Reaktionsmischung zugegeben wird.

Der Aminoendgruppengehalt in den Polyarylethern $A_I$ kann beispielsweise mittels bekannter analytischer Methoden wie tentiometrischer Titration bestimmt werden.

Komponente B

Als weitere Komponente enthalten die erfindungsgemäßen Formmassen 5 bis 95 Gew.-%, bevorzugt 15 bis 85 Gew.-%, einer Schmelzkompoundierten Mischung aus teilaromatischen Copolyamiden ($B_I$) und schlagzähmodifizierenden Polymeren ($B_{II}$).

Erfindungsgemäß enthalten diese Mischungen 75 bis 97 Gew.-%, bevorzugt 80 bis 95 Gew.-% teilaromatischer Copolyamide und 3 bis 25, bevorzugt 5 bis 20 Gew.-% eines schlagzähmodifizierenden Polymeren.

Die teilaromatischen Copolyamide $B_I$ können durch Copolykondensation von aliphatischen und aromatischen Polyamiden oder deren Monomerbausteinen hergestellt werden, z.B. Copolymere aus Adipinsäure, Isophthalsäure oder Terephthalsäure und Hexamethylendiamin.

Zu den geeigneten Copolyamiden zählen solche, die aufgebaut sind aus

B1: 20 bis 90 Gew.-% Einheiten, die sich von Terephthalsäure und Hexamethylendiamin ableiten und

B2: 10 bis 80 Gew.-% Einheiten mindestens eines der Bausteine B21, B22 und/oder B23, nämlich

B21: bis zu 50 Gew.-% Einheiten, die sich von ε-Caprolactam ableiten,

B22: bis zu 80 Gew.-% Einheiten, die sich von Adipinsäure und Hexamethylendiamin ableiten und/oder

B23: bis zu 40 Gew.-% Einheiten aus weiteren polyamidbildenden Monomeren.

Zur Stabilisierung gegen oxidativen und thermischen Abbau können darüber hinaus dem Copolyamid oder dem herzustellenden Blend aus den Komponenten A und B bis zu 2 Gew.-% mindestens eines aromatischen, sekundären Amins und/oder bis zu 2000 ppm mindestens einer phosphorhaltigen anorganischen Säure oder deren Derivate zugesetzt werden (Stabilisatoren), wobei der Anteil an Stabilisatoren sich auf die anteilige Menge an Copolyamid bezieht.

Der Anteil an Einheiten, die sich von ε-Caprolactam ableiten, beträgt vorzugsweise 20 bis 50 Gew.-%, insbesondere 25 bis 40 Gew.-%, während der Anteil an Einheiten die sich von Adipinsäure und Hexamethylendiamin ableiten, vorzugsweise 30 bis 75 Gew.-% und insbesondere 35 bis 60 Gew.-% beträgt.

Die Copolyamide können sowohl Einheiten von ε-Caprolactam als auch Einheiten von Adipinsäure und Hexamethylendiamin enthalten; dabei beträgt der Anteil an solchen Einheiten, die frei von aromatischen Gruppen sind, mindestens 10 Gew.-%, vorzugsweise mindestens 20 Gew.-%. Das Verhältnis der Einheiten, die sich von ε-Caprolactam und von Adipinsäure und Hexamethylendiamin ableiten, kann ein beliebiges sein.

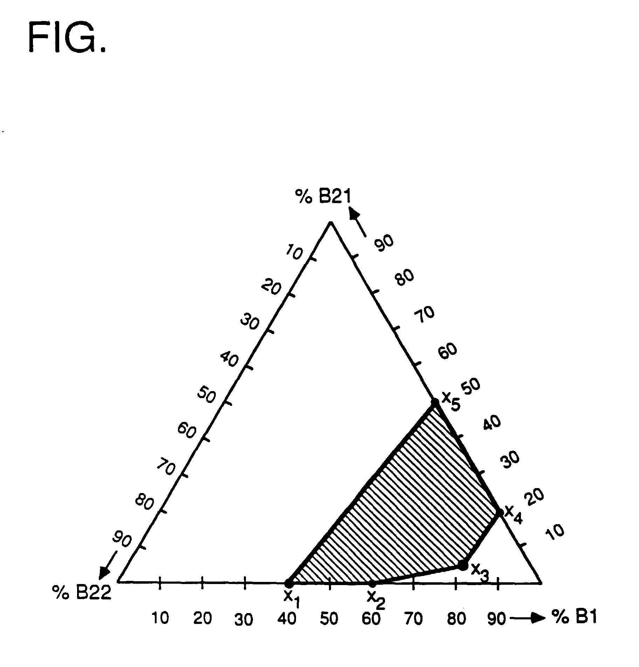

Bevorzugt werden Copolyamide, deren Zusammensetzung in einem Dreistoffdiagramm (vgl. Fig. 1) innerhalb des durch Eckpunkte $X_1$ bis $X_5$ festgelegten Fünfecks liegt, wobei die Punkte $X_1$ bis $X_5$ folgendermaßen definiert sind:

$X_1$: 40 Gew.-% Einheiten B1
60 Gew.-% Einheiten B22

$X_2$: 60 Gew.-% Einheiten B1
40 Gew.-% Einheiten B22

$X_3$: 80 Gew.-% Einheiten B1
5 Gew.-% Einheiten B21
15 Gew.-% Einheiten B22

$X_4$: 80 Gew.-% Einheiten B1
20 Gew.-% Einheiten B21

$X_5$: 50 Gew.-% Einheiten B1
50 Gew.-% Einheiten B21

Als besonders vorteilhaft für viele Anwendungszwecke haben sich Polyamide erwiesen, die 50 bis 80, insbesondere 60 bis 75 Gew.-% Einheiten, die sich von Terephthalsäure und Hexamethylendiamin ableiten (Einheiten B1) und 20 bis 50, zugsweise 25 bis 40 Gew.-% Einheiten, die sich von ε-Caprolactam ableiten (Einheiten B21), enthalten.

Neben den vorstehend beschriebenen Einheiten B1 bis B22 können die teilaromatischen Copolyamide bis zu 40, vorzugsweise 10 - 30 Gew.-% und insbesondere 20 - 30 Gew.-% weiterer polyamidbildender Monomerer B23 enthalten, wie sie von anderen Polyamiden bekannt sind.

Zur Einbringung der Bausteine B23 sind z.B. geeignet aromatische Dicarbonsäuren wie beispielsweise Isophthalsäure, substituierte Terephthal- und Isophthalsäuren wie 3-t-Butylisophthalsäure, mehrkernige Dicarbonsäuren, z.B. 4,4'-Diphenyldicarbonsäure, 4,4'-Diphenylmethandicarbonsäure, 4,4'- und 3,3'-Diphenylsulfondicarbonsäure, 1,4- oder 2,6-Naphthalindicarbonsäure und Phenoxyterephthalsäure, wobei Isophthalsäure besonders bevorzugt ist.

Ferner geeignet als polyamidbildende Dicarbonsäuren sind aliphatische Dicarbonsäuren mit 4 bis 16 Kohlenstoffatomen und als polyamidbildende Diamine aliphatische oder cycloaliphatische Diamine mit 4 bis 16 Kohlenstoffatomen, die sich von denen der Komponenten B1, B21 und B22 unterscheiden. Als geeignete Monomere dieser Art seien Suberinsäure, Azelainsäure oder Sebacinsäure bzw. 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan genannt. Aus der Gruppe der Lactame bzw. Aminocarbonsäuren kommen Capryllactam, Önanthlactam, ω-Aminoundecansäure und Laurinlactam in Betracht.

Hierbei sind folgende Zusammensetzungen der Komponente $B_I$ besonders bevorzugt.

B1: 65 bis 85 Gew.-% Einheiten, die sich von Terephthalsäure und Hexamethylendiamin ableiten und

B23: 15 bis 35 Gew.-% Einheiten, die sich von Isophthalsäure und Hexamethylendiamin ableiten
oder

B1: 50 bis 70 Gew.-% Einheiten, die sich von Terephthalsäure und Hexamethylendiamin ableiten und

B22: 10 bis 20 Gew.-% Einheiten, die sich von Adipinsäure und Hexamethylendiamin ableiten und

B23: 20 bis 30 Gew.-% Einheiten, die sich von Isophthalsäure und Hexamethylendiamin ableiten.

Enthält B23 4,4'-substituierte symmetrische Dicarbonsäuren, so empfiehlt es sich, diese mit B1 und B21 oder B1 und B22 als ternäre Copolyamide aufzubauen, da andernfalls das Copolyamid einen zu hohen Schmelzpunkt aufweist und nur unter Zersetzung schmilzt, was nicht wünschenswert ist.

Es sollte darauf geachtet werden, daß die teilaromatischen Copolyamide einen Triamingehalt von weniger als 0,5, vorzugsweise von weniger als 0,3 Gew.-% aufweisen.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen

bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270°C bis 325°C, bevorzugt von 280 bis 310°C, wobei diese hohen Schmelzpunkte auch mit hohen Glasübergangstemperaturen von in der Regel mehr als 75, insbesondere mehr als 85°C (im trockenen Zustand) verbunden sind.

Binäre Copolyamide auf der Basis von Terephthalsäure, Hexamethylendiamin und ε-Caprolactam haben bei Gehalten von etwa 70 Gew.-% an Einheiten, die sich von Terephthalsäure und Hexamethylendiamin ableiten, einen Schmelzpunkt im Bereich von 300°C und (im trockenen Zustand) eine Glasübergangstemperatur von mehr als 110°C.

Binäre Copolyamide auf der Basis von Terephthalsäure, Adipinsäure und Hexamethylendiamin erreichen bereits bei niedrigerem Gehalt (z.B. von etwa 55 Gew.-% Einheiten an Terephthalsäure und Hexamethylendiamin (HMD)) einen Schmelzpunkt von 300°C und mehr, wobei die Glastemperatur nicht ganz so hoch liegt wie bei binären Copolyamiden, die anstelle von Adipinsäure bzw. Adipinsäure/HMD ε-Caprolactam enthalten.

Die Herstellung teilaromatischer Copolyamide mit hoher Wärmeformbeständigkeit und guten mechanischen Eigenschaften wird z.B. in der DE-OS 3 723 688 beschrieben.

Die bevorzugten teilaromatischen Copolyamide weisen einen Kristallinitätsgrad von mehr als 10 %, bevorzugt von mehr als 15 %, und insbesondere von mehr als 20 % auf.

Der Kristallinitätsgrad ist ein Maß für den Anteil an kristallinen Fragmenten im Copolyamid und wird durch Röntgenbeugung bestimmt.

Die bevorzugten teilaromatischen Copolyamide mit niedrigem Triamingehalt werden vorteilhaft nach den in den EP-A 129 195 und 129 196 beschriebenen Verfahren erhalten.

Die relative Viskosität der teilaromatischen Copolyamide, gemessen in 1 Gew.-% Lösung in 96 Gew.-% $H_2SO_4$ bei 23°C, liegt im allgemeinen im Bereich von 2,2 bis 5,0, vorzugsweise von 2,3 bis 4,5.

Als Copolyamide $B_I$ können auch Mischungen verschiedener Copolyamide eingesetzt werden, wobei das schungsverhältnis beliebig ist.

Mischungsbestandteil $B_{II}$ sind schlagzähmodifizierende Polymere.

Als schlagzähmodifizierende Polymere sind besonders solche geeignet, die mit den teilaromatischen Copolyamiden $B_I$ verträglich sind.

Polymere, die die Zähigkeit von Polyamiden erhöhen, weisen i.a. zwei wesentliche Merkmale auf: sie enthalten einen elastomeren Anteil, der eine Glasübergangstemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Polymere $B_{II}$ seien z.B. folgende genannt:

Ethylen-Propylen-(EP-) bzw. Ethylen-Propylen-Dien-(EPDM-)Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomere können in der Schmelze oder in Lösung, gegebenenfalls in Gegenwart eines Radikalstarters wie Cumolhydroperoxid, auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl (meth)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder n-Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen chen Kern und eine harte Schale oder harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter tionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, (Meth)Acrylsäure, Glycidyl(meth-)-acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern $B_{II}$ sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Polymerer als $B_{II}$ eingesetzt werden.

Die Komponente B wird nach an sich bekannten Verfahren hergestellt, indem die Ausgangsmaterialien $B_I$ und $B_{II}$ in üblichen Mischvorrichtungen wie Schneckenextrudern, vorzugsweise Zweischneckenextrudern, Brabender-Mühlen, Banbury-Mühlen oder Knetern gemischt und anschließend extrudiert werden.

Nach der Extrusion wird das Extrudat abgekühlt und zerkleinert. Die Komponente B wird im allgemeinen mit mittleren Mischzeiten von 0,2 bis 10 Minuten bei einer Temperatur von 280 bis 320°C hergestellt.

Neben den beschriebenen Bestandteilen (A) und (B) können die erfindungsgemäßen Formmassen noch 0 bis 40 Gew.-% weiterer Additive (C) wie Flammschutzmittel und Stabilisatoren enthalten.

Als Stabilisatoren enthalten die erfindungsgemäßen Formmassen üblicherweise entweder ein aromatisches sekundäres Amin oder eine Phosphorverbindung oder beides. Das aromatische sekundäre Amin wird z.B. in Mengen von 0,1 bis 2, vorzugsweise 0,5 bis 1,5 und insbesondere 0,7 bis 1 Gew.-%, bezogen auf den Anteil der Komponente $B_I$, verwendet. Geeignete derartige Amine können z.B. durch die allgemeine Formel

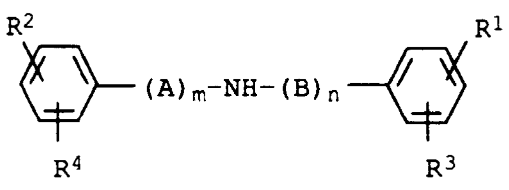

IV

beschrieben werden, in der bedeuten

m, n: 0 oder 1;

A, B: durch $C_1$-$C_4$-Alkyl oder Phenyl substituiertes tertiäres C;

$R^1$, $R^2$: Wasserstoff oder eine $C_1$-$C_6$-Alkylgruppe in ortho- oder para-Stellung, welche gegebenenfalls substituiert sein kann durch 1 bis 3 Phenylreste, Halogen, eine Carboxylgruppe oder ein Übergangsmetallsalz einer Carboxylgruppe und

$R^3$, $R^4$: Wasserstoff oder einen Methylrest in ortho- oder para-Position, wenn die Summe aus m plus n den Wert 1 hat oder eine tertiäre $C_3$-$C_9$-Alkylgruppe in ortho- oder para-Position, welche gegebenenfalls durch 1 bis 3 Phenylreste substituiert sein kann, wenn die Summe aus m plus n den Wert O oder 1 hat.

Bevorzugte Reste A oder B sind symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, welche 1 bis 3 Phenylgruppen als Substituenten aufweisen.

Bevorzugte Reste $R^1$ oder $R^2$ sind para t-butyl oder tetramethylsubstituiertes n-butyl, wobei die Methylgruppen vorzugsweise durch 1 bis 3 Phenylgruppen ersetzt sein können. Bevorzugte Halogene sind Chlor und Brom. Übergangsmetalle sind beispielsweise Kupfer oder Nickel, welche mit $R^1$ oder $R^2$ Carboxyl-Übergangsmetallsalze bilden können.

Bevorzugte Reste $R^3$ oder $R^4$ sind für m plus n = 2 Wasserstoff, sowie für m plus n = 0 oder 1 ein t-Butylrest in ortho- oder para-Position, welcher insbesondere durch 1 bis 3 Phenylreste substituiert sein kann.

Beispiele für geeignete sekundäre aromatische Amine sind der nicht vorveröffentlichten deutschen Patentanmeldung P 41 12 324.7 zu entnehmen.

Bevorzugte sekundäre aromatische Amine sind Diphenylamin und dessen Derivate, welche im Handel erhältlich sind (z.B. Naugard® der Firma Uniroyal).

Außerdem enthalten die erfindungsgemäßen Formmassen z.B. 100 bis 2000, bevorzugt 200 - 500 und insbesondere 200 bis 400 ppm mindestens einer phosphorhaltigen anorganischen Säure oder deren Derivaten, (bezogen auf das Polyamid $B_I$ in der Formmasse).

Bevorzugte Säuren sind hypophosphorige Säure, phosphorige Säure oder Phosphorsäure sowie deren Salze mit Alkalimetallen, wobei Natrium- und Kaliumsalze besonders bevorzugt sind. Bevorzugte Mischungen sind insbesondere solche aus hypophosphoriger und phosphoriger Säure bzw. deren Alkalimetallsalze im Gewichtsverhältnis 3:1 bis 1:3. Unter organischen Derivaten der phosphorhaltigen anorganischen Säuren sollen vorzugsweise Esterderivate derselben verstanden werden.

Die erfindungsgemäßen thermoplastischen Formmassen können nach an sich bekannten Verfahren hergestellt werden, indem man die Ausgangskomponenten (A) und (B) in üblichen Mischvorrichtungen wie Schneckenextrudern, vorzugsweise schneckenextrudern, Brabender-Mühlen, Banbury-Mühlen oder Knetern mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Dazu sind im allgemeinen mittlere Mischzeiten von 0,2 bis 30 Minuten bei einer Temperatur von 280 bis 380°C erforderlich.

Falls den Formmassen eine Komponente C zugesetzt wird, kann die Reihenfolge der Mischung der Komponenten A, B und C variiert werden. So können zwei der Komponenten A, B und C vorgemischt werden, es können aber auch alle Komponenten gemeinsam gemischt werden.

Die erfindungsgemäßen Formmassen zeichnen sich durch gute zähigkeit, hohe Wärmeformbeständigkeit und hervorragende Fließfahigkeit aus.

Aufgrund ihrer hohen Wärmeformbeständigkeit und guten mechanischen Eigenschaften eignen sich die erfindungsgemäßen Formmassen zum Herstellen von Formteilen, insbesondere für elektrische und elektronische Gerätebauteile. Die erfindungsgemäßen Formmassen lassen sich aber auch zu Folien oder Fasern verarbeiten. Die hohe Wärmeformbeständigkeit in Kombination mit guter Chemikalienbeständigkeit ermöglicht auch Anwendungen im chemisch-technischen Bereich, z.B. Anlagenbau oder auf dem Gebiet der medizinischen Technik.

Beispiele

Komponente $A_1$

$A_1$: Polyarylether mit einer überwiegenden Grundstruktur entsprechend Formel (II), charakterisiert durch eine Viskositätszahl VZ von 64 ml/g, gemessen in 1 gew.-%iger Lösung in Phenol/1,2-Dichlorbenzol 1:1 bei 25°C.

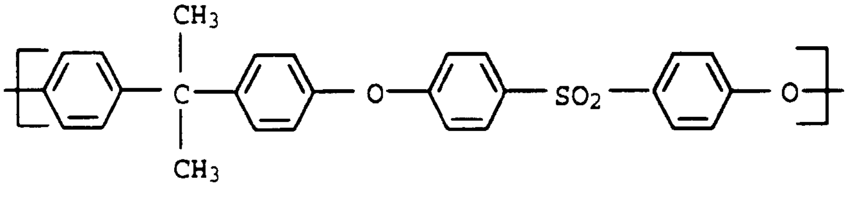

(II)

**$A_2$**: Polyarylether mit überwiegender Grundstruktur entsprechend Formel (III), charakterisiert durch eine VZ von 59 ml/g, gemessen in 1 gew.-%iger Lösung in Phenol/1,2-Dichlorbenzol 1:1 bei 25°C.

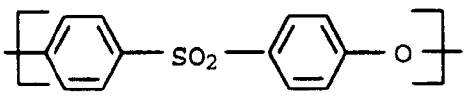

(III),

Komponente B

Als Ausgangsmaterialien zur Herstellung der Komponenten B wurden verwendet:

$B_{I.1}$* Teilaromatisches Copolyamid, erhältlich durch Umsetzen der folgenden Monomeren

34,09 mol-% Terephthalsäure
31,82 mol-% ε-Caprolactam und
34,09 mol-% Hexamethylendiamin,

mit einer relativen Viskosität von 2,4 (gemessen in 1 gew.-%iger Lösung in 96 %iger Schwefelsäure bei 25°C).

$B_{II.1}$* Ethylen-Propylen-Kautschuk, mit 0,7 Gew.-% Maleinsäure und/oder Maleinsäureanhydrid gepfropft, kennzeichnet durch einen Schmelzindex von 3 g/10 min (gemessen bei 2,16 kg, 230°C).

PA* Aliphatisches Polyamid aus 1,6-Diaminohexan und Adipinsäure mit einem K-Wert (nach Fikentscher) von 76; entsprechend einer relativen Viskosität $\eta_{rel}$ von 2,95, gemessen in 1 gew.-%iger Lösung in 96 %iger Schwefelsäure bei 25°C.

Durch Schmelzkompoundierung auf einem Zweiwellenextruder (ZSK 30 der Firma Werner und Pfleiderer) bei einer Massetemperatur von 310°C wurden folgende schlagzähmodifizierten teilaromatischen Copolyamide **B** bzw. folgendes schlagzähmodifiziertes aliphatisches Polyamid PA hergestellt:

Tabelle 1

| | $B_{I.1}$ | $B_{II.1}$ | PA |
|---|---|---|---|
| $B_{I.1}$* [Gew.-%] | 92 | 84 | |
| $B_{II.1}$* [Gew.-%] | 8 | 16 | 16 |
| PA* [Gew.-%] | - | - | 84 |

Herstellung der Formmassen

Die Komponenten wurden in einem Zweiwellenextruder bei einer Massetemperatur von 310 bis 350°C gemischt. Die Schmelze wurde durch ein Wasserbad geleitet und granuliert.

Die verwendeten Polyamide (Komponente $B_{I.1}$* und PA) enthielten jeweils, bezogen auf den Anteil der Polyamide im Blend, 1 Gew.-% 4,4'-Bis(α,α-dimethylbenzyl)diphenylamin (Naugard® 445, Firma Uniroyal) sowie 500 ppm $NaH_2PO_3 \times 5\ H_2O$ (Handelsprodukt der Firma Merck).

Das getrocknete Granulat wurde bei 310 bis 330°C zu Rundscheiben und Normkleinstäben gespritzt.

Die Wärmeformbeständigkeit der Proben wurde mittels der Vicat-Erweichungstemperatur ermittelt. Die Vicat-Erweichungswurde nach DIN 53 460, mit einer Kraft von 49,05 N und einer Temperatursteigerung von 50 K je Stunde, an Normkleinstäben bestimmt.

Die Zähigkeit der Proben wurde anhand der Durchstoßbarkeit bestimmt. Der Durchstoßarbeit wurde nach DIN 53 443 an Rundscheiben bestimmt.

Die Elastizitätsmodule, die die Steifigkeit der Proben wiedergeben, wurden nach DIN 53457-3 an Schulterstäben bestimmt. Zusammensetzung der Formmassen und Ergebnisse der Messungen sind den Tabellen 2 und 3 zu entnehmen.

Tabelle 2

| Formmasse | erfindungsgemäß | | | | | | | zum Vergleich | | | |
|---|---|---|---|---|---|---|---|---|---|---|---|
| Nr. | 1 | 2 | 3 | 4 | 5 | 6 | 7 | 8 | 9 | 10 | 11 |
| Komponente [Gew.-%] | | | | | | | | | | | |
| $A_1$ | 85 | 75 | 65 | 40 | 85 | 75 | 65 | 75 | 65 | 65 | 65 |
| $B_{I.1}$ | 15 | 25 | 35 | 60 | – | – | – | – | – | – | – |
| $B_{II.1}$ | – | – | – | – | 15 | 25 | 35 | – | – | – | – |
| PA | – | – | – | – | – | – | – | 25 | 35 | – | – |
| $B_{I.1}$* | – | – | – | – | – | – | – | – | – | 32,2 | 29,4 |
| $B_{II.1}$* | – | – | – | – | – | – | – | – | – | 2,8 | 5,6 |
| Durchstoßarbeit (Nm) | 54 | 48 | 46 | 47 | 58 | 53 | 53 | 12 | 6 | 2 | 2 |
| $T_{Vicat}$ [°C] | 180 | 177 | 173 | 162 | 178 | 175 | 172 | 169 | 165 | 172 | 171 |
| E-Modul [N/mm²] | 2800 | 2820 | 2820 | 2840 | 2700 | 2640 | 2600 | 2400 | 2300 | 2650 | 2460 |

Tabelle 3

| Formmasse | erfindungsgemäß | | | | | | | zum Vergleich | | | |
|---|---|---|---|---|---|---|---|---|---|---|---|
| Nr. | 12 | 13 | 14 | 15 | 16 | 17 | 18 | 19 | 20 | 21 | 22 |
| Komponente [Gew.-%] | | | | | | | | | | | |
| $A_2$ | 85 | 75 | 65 | 40 | 85 | 75 | 65 | 75 | 65 | 65 | 65 |
| $B_{I.1}$ | 15 | 25 | 35 | 60 | – | – | – | – | – | – | – |
| $B_{II.1}$ | – | – | – | – | 15 | 25 | 35 | – | – | – | – |
| PA | – | – | – | – | – | – | – | 25 | 35 | – | – |
| $B_{I.1}^*$ | – | – | – | – | – | – | – | – | – | 32,2 | 29,4 |
| $B_{II.1}^*$ | – | – | – | – | – | – | – | – | – | 2,8 | 5,6 |
| Durchstoß-arbeit (Nm) | 60 | 53 | 51 | 50 | 62 | 59 | 57 | 9 | 3 | 1 | 1 |
| $T_{Vicat}$ [°C] | 210 | 208 | 207 | 206 | 208 | 204 | 202 | 199 | 196 | 205 | 200 |
| E-Modul [N/mm²] | 2830 | 2840 | 2840 | 2860 | 2750 | 2720 | 2700 | 2500 | 2350 | 2650 | 2480 |

Wie die Beispiele zeigen, zeichnen sich die erfindungsgemäßen den Formmassen sowohl gegenüber Mischungen, die ein schlagzähmodifiziertes Polyamid enthalten (Beispiele 8, 9, 19 und 20) als auch den Mischungen, die den Polyarylether, das teilaromatische Copolyamid und den Kautschuk als Einzelbestandteile enthalten (Beispiele 10, 11, 21 und 22) durch überraschend höhere Zähigkeiten und auch deutlich höhere Steifigkeiten aus. Die erfindungsgemäßen Formmassen zeichnen sich außerdem durch gute Wärmeformbeständigkeiten aus.

**Patentansprüche**

**1.** Formmassen, aufgebaut aus

A) 5 bis 95 Gew.-% Polyarylether (A) mit wiederholten Strukturelementen

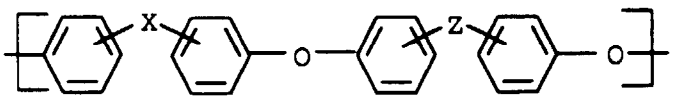 (I)

oder deren kernsubstituierten $C_1$- bis $C_6$-Alkyl-, $C_1$-bis $C_6$-Alkoxy-, Aryl-, Chlor- oder Fluorderivaten, wobei

X — -$SO_2$-, -SO-, -S-, -O-, -CO-, -N=N-, -RC=$CR^a$-, -$CR^bR^c$- oder eine chemische Bindung sein kann und

Z — ausgewählt ist aus -$SO_2$-, -SO-, CO, -N=N- und -RC=$CR^{a-}$, wobei

R und $R^a$ — jeweils Wasserstoff oder eine $C_1$- bis $C_6$-Alkylgruppe darstellen,

$R^b$ und $R^c$ — jeweils Wasserstoff oder eine $C_1$- bis $C_6$-Alkyl-, $C_4$- bis $C_{10}$-Cycloalkyl-, $C_1$- bis $C_6$-Alkoxy- oder Arylgruppe oder jeweils deren Fluor- oder Chlorderivate sein können und

B) 5 bis 95 Gew.-% einer Schmelzkompoundierten Mischung (B) aus

$B_I$) 75 bis 97 Gew.-% teilaromatischer Polyamide mit einem Triamingehalt von weniger als 0,5 Gew.-% und
$B_{II}$) 3 bis 25 Gew.-% schlagzähmodifizierender Polymerer

sowie darüber hinaus

C) 0 bis 40 Gew.-% Zusatzstoffe und/oder Verarbeitungshilfsmittel.

**2.** Formmassen nach Anspruch 1, aufgebaut aus

A) 15 bis 85 Gew.-% Polyarylether (A) und
B) 15 bis 85 Gew.-% einer Mischung (B) sowie darüber hinaus
C) 0 bis 40 Gew.-% Zusatzstoffe und/oder Verarbeitungshilfsmittel.

**3.** Formmassen nach einem der Ansprüche 1 oder 2, in denen die Polyarylether (A)

$a_1$) 5 bis 95 Mol-% wiederkehrende Einheiten

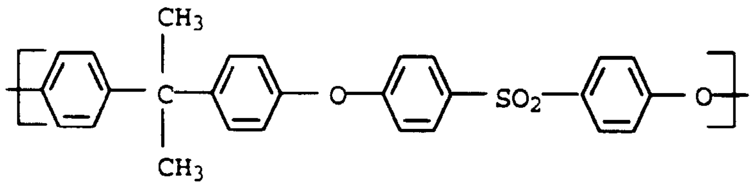 (II)

und

$a_2$) 5 bis 95 Mol-% wiederkehrende Einheiten

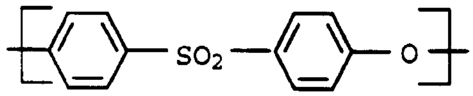 (III),

enthalten.

**4.** Formmassen nach einem der Ansprüche 1 bis 3, die als Polyarylether eine Mischung aus

$A_I$) 0,5 bis 50 Gew.-% Polyarylether enthaltend Aminoendgruppen und

$A_{II}$) 50 bis 99,5 Gew.-% Polyarylether mit Endgruppen, die keine Aminogruppen sind,

enthalten.

**5.** Formmassen nach einem der Ansprüche 1 bis 3, in denen die teilaromatischen Polyamide ($B_I$) aufgebaut sind aus

B1: 20 bis 90 Gew.-% Einheiten, die sich von Terephthalsäure und Hexamethylendiamin ableiten

B2: 10 bis 80 Gew.-% Einheiten, mindestens eines der Bausteine B21, B22 und/oder B23, nämlich

B21: 0 bis 50 Gew.-% Einheiten, die sich von ε-Caprolactam ableiten,

B22: 0 bis 80 Gew.-% Einheiten, die sich von Adipinsäure und Hexamethylendiamin ableiten,

B23: 0 bis 40 Gew.-% weiteren polyamidbildenden Monomeren.

**6.** Formmassen nach einem der Ansprüche 1 bis 4, in denen die teilaromatischen Polyamide ($B_I$) aufgebaut sind aus

B1) 50 bis 80 Gew.-% Einheiten, die sich von Terephthalsäure und Hexamethylendiamin ableiten und

B21) 20 bis 50 Gew.-% Einheiten, die sich von ε-Caprolactam ableiten.

**7.** Formmassen nach einem der Ansprüche 1 bis 6, in denen als schlagzähmodifizierenden Polymere ($B_{II}$) Ethylen-Propylen-Copolymere oder Ethylen-Propylenkautschuke, gepfropft mit mindestens einem Pfropfreagens ausgewählt aus der Gruppe Maleinsäure, Maleinsäureanhydrid, Itaconsäure, Acrylsäure, Glycidylacrylat und Glycidylmethacrylat, enthalten sind.

**8.** Formmassen nach einem der Ansprüche 1 bis 6, in denen die schlagzähmodifizierenden Polymere ($B_{II}$) Copolymere von α-Olefinen mit 2 bis 8 Kohlenstoffatomen und $C_1$ bis $C_8$-Alkylacrylaten und/oder $C_1$- bis $C_8$-Alkylmethacrylaten oder Vinyl-$C_2$- bis $C_8$-estern enthalten sind.

**9.** Verwendung der Formmassen gemäß einem der Ansprüche 1 bis 8 zur Herstellung von Formkörpern, Folien oder

Fasern.

**10.** Formkörper, Folien oder Fasern, erhältlich unter Verwendung der Formmassen gemäß einem der Ansprüche 1 bis 8.

**Claims**

**1.** A molding material composed of

A) from 5 to 95% by weight of a polyaryl ether (A) having repeating structural elements

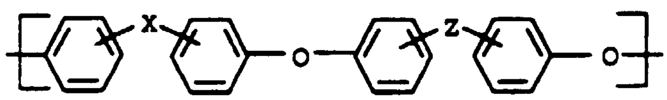

(I)

or the $C_1$-$C_6$-alkyl, $C_1$-$C_6$-alkoxy, aryl, chlorine or fluorine derivatives thereof which are substituted in the nucleus,
where

X may be $-SO_2-$, -SO-, -S-, -O-, -CO-, -N=N-, $-RC=CR^a-$, $-CR^bR^c-$ or a chemical bond,
Z is selected from the group consisting of $-SO_2-$, -SO-, -CO-, -N=N- and $-RC=CR^a-$,
R and $R^a$ are each hydrogen or $C_1$-$C_6$-alkyl and
$R^b$ and $R^c$ may each be hydrogen or $C_1$-$C_6$-alkyl, $C_4$-$C_{10}$-cycloalkyl, $C_1$-$C_6$-alkoxy or aryl or a fluorine or chlorine derivative of each of these, and

B) from 5 to 95% by weight of a melt-compounded mixture (B) of

$B_I$) from 75 to 97% by weight of partly aromatic polyamides having a triamine content of less than 0.5% by weight and
$B_{II}$) from 3 to 25% by weight of polymeric impact modifiers

and furthermore
C) from 0 to 40% by weight of additives or processing assistants.

**2.** A molding material as claimed in claim 1, composed of

A) from 15 to 85% by weight of a polyaryl ether (A) and
B) from 15 to 85% by weight of a mixture (B) and furthermore
C) from 0 to 40% by weight of additives or processing assistants.

**3.** A molding material as claimed in claim 1 or 2, in which the polyaryl ether (A) contains

$a_1$) from 5 to 95 mol % of repeating units

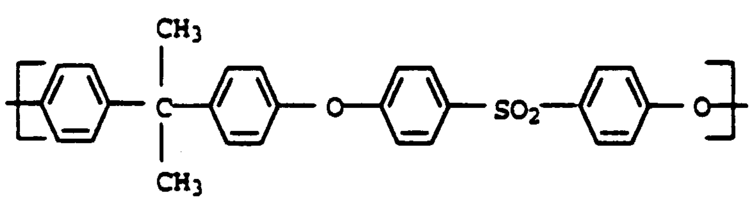

(II)

and
$a_2$) from 5 to 95 mol % of repeating units

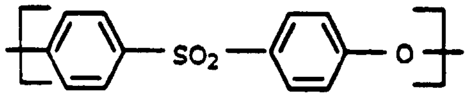

(III)

4. A molding material as claimed in any of claims 1 to 3, which contains, as polyaryl ether A, a mixture of

$A_I$) from 0.5 to 50% by weight of polyaryl ethers containing terminal amino groups
and
$A_{II}$) from 50 to 99.5% by weight of a polyaryl ether having terminal groups which are not amino groups.

5. A molding material as claimed in any of claims 1 to 3, in which the partly aromatic polyamides ($B_I$) are composed of

B1: from 20 to 90% by weight of units which are derived from terephthalic acid and hexamethylenediamine and
B2: from 10 to 80% by weight of units of at least one of the building blocks B21, B22 or B23, ie.
B21: from 0 to 50% by weight of units which are derived from ε-caprolactam,
B22: from 0 to 80% by weight of units which are derived from adipic acid and hexamethylenediamine and
B23: from 0 to 40% by weight of further polyamide-forming monomers.

6. A molding material as claimed in any of claims 1 to 4, in which the partly aromatic polyamides ($B_I$) are composed of

B1) from 50 to 80% by weight of units which are derived from terephthalic acid and hexamethylenediamine and
B21) from 20 to 50% by weight of units which are derived from ε-caprolactam.

7. A molding material as claimed in any of claims 1 to 6, in which ethylene/propylene copolymers or ethylene/propylene rubbers, grafted with at least one grafting reagent selected from the group consisting of maleic acid, maleic anhydride, itaconic acid, acrylic acid, glycidyl acrylate and glycidyl methacrylate, are present as polymeric impact modifiers ($B_{II}$).

8. A molding material as claimed in any of claims 1 to 6, in which copolymers of α-olefins of 2 to 8 carbon atoms and $C_1$-$C_8$-alkyl acrylates or $C_1$-$C_8$-alkyl methacrylates or vinyl $C_2$-$C_8$-esters are present as polymeric impact modifiers ($B_{II}$).

9. The use of a molding material as claimed in any of claims 1 to 8 for the production of moldings, films or fibers.

10. A molding, film or fiber obtainable using a molding material as claimed in any of claims 1 to 8.

## Revendications

1. Masses à mouler constituées

A) à concurrence de 5 à 95% en poids, par des polyaryléthers (A) comprenant des éléments de structure récurrents

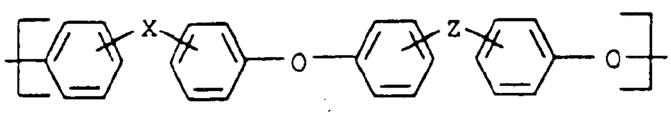

(I)

ou par leurs dérivés alkyle en $C_1$-$C_6$, alcoxy en $C_1$-$C_6$, aryle, chlorés ou fluorés substitués au noyau, dans lesquels

X peut représenter $-SO_2-$, -SO-, -S-, -O-, -CO-, -N=N-, $-RC=CR^a-$, $-CR^bR^c-$ ou encore une liaison chimique, et

Z est choisi parmi $-SO_2-$, -SO-, CO, -N=N- et $-RC=CR^a-$, dans lesquels

$R$ et $R^a$ représentent respectivement un atome d'hydrogène ou un groupe alkyle en $C_1$ -$C_6$,

$R^b$ et $R^c$ peuvent représenter respectivement un atome d'hydrogène ou encore un groupe alkyle en $C_1$-$C_6$, un groupe cycloalkyle en $C_4$-$C_{10}$, un groupe alcoxy en $C_1$-$C_6$ ou un groupe aryle ou encore respectivement leurs dérivés fluorés ou chlorés, et

B) à concurrence de 5 à 95% en poids, par un mélange (B) composé en fusion, constitué

$B_I$) à concurrence de 75 à 97% en poids, par des polyamides partiellement aromatiques possédant une teneur en triamine inférieure à 0,5% en poids, et

$B_{II}$) à concurrence de 3 à 25% en poids, par des polymères procurant une modification à résistance élevée aux chocs,

et, en outre,

C) à concurrence de 0 à 40% en poids, par des additifs et/ou des adjuvants de traitement.

**2.** Masses à mouler selon la revendication 1, constituées

A) à concurrence de 15 à 85% en poids, par des polyaryléthers (A) et
B) à concurrence de 15 à 85% en poids, par un mélange (B), et, en outre,
C) à concurrence de 0 à 40% en poids, par des additifs et/ou des adjuvants de traitement.

**3.** Masses à mouler selon l'une quelconque des revendications 1 ou 2, dans lesquelles les polyaryléthers (A) contiennent

$a_1$) à concurrence de 5 à 95 moles %, des unités récurrentes

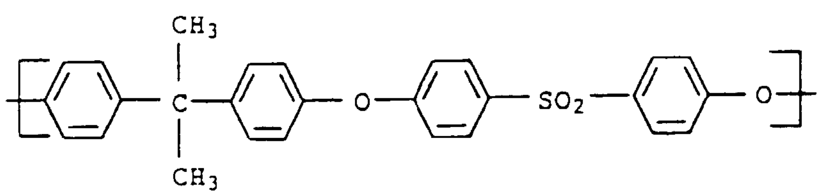 (II)

et

$a_2$) à concurrence de 5 à 95 moles %, des unités récurrentes

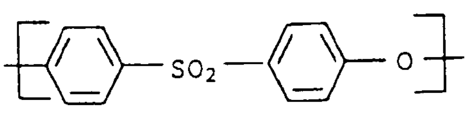 (III),

**4.** Masses à mouler selon l'une quelconque des revendications 1 à 3, qui contiennent, comme polyaryléthers, un mélange constitué

$A_I$) à concurrence de 0,5 à 50% en poids, par des polyaryléthers contenant des groupes terminaux amino et

$A_{II}$) à concurrence de 50 à 99,5% en poids, par des polyaryléthers contenant des groupes terminaux qui ne sont pas des groupes amino.

**5.** Masses à mouler selon l'une quelconque des revendications 1 à 3, dans lesquelles les polyamides partiellement aromatiques ($B_I$) sont constitués

B1: à concurrence de 20 à 90% en poids, par des unités qui dérivent de l'acide téréphtalique et de l'hexaméthylènediamine,

B2: à concurrence de 10 à 80% en poids, par des unités d'au moins un des constituants B21, B22 et/ou B23, notamment,

B21: à concurrence de 0 à 50% en poids, par des unités qui dérivent du ε-caprolactame,

B22: à concurrence de 0 à 80% en poids, par des unités qui dérivent de l'acide adipique et de l'hexaméthylènediamine,

B23: à concurrence de 0 à 40% en poids, par d'autres monomères formant des polyamides.

**6.** Masses à mouler selon l'une quelconque des revendications 1 à 4, dans lesquelles les polyamides partiellement aromatiques ($B_I$) sont constitués

B1: à concurrence de 50 à 80% en poids, par des unités qui dérivent de l'acide téréphtalique et de l'hexaméthylènediamine et

B21: à concurrence de 20 à 50% en poids, par des unités qui dérivent du ε-caprolactame.

**7.** Masses à mouler selon l'une quelconque des revendications 1 à 6, dans lesquelles sont contenus, à titre de polymères ($B_{II}$) procurant une modification à résistance élevée aux chocs, des copolymères d'éthylène-propylène ou des caoutchoucs d'éthylène-propylène greffés avec au moins un réactif de greffage choisi parmi le groupe comprenant l'acide maléique, l'anhydride maléique, l'acide itaconique, l'acide acrylique, l'acrylate de glycidyle et le méthacrylate de glycidyle.

**8.** Masses à mouler selon l'une quelconque des revendications 1 à 6, dans lesquelles les polymères ($B_{II}$) procurant une modification à résistance élevée aux chocs contiennent des copolymères d'α-oléfines contenant de 2 à 8 atomes de carbone et des acrylates d'alkyle en $C_1$-$C_8$ et/ou des méthacrylates d'alkyle en $C_1$-$C_8$ ou encore des esters vinyliques en $C_2$-$C_8$.

**9.** Utilisation des masses à mouler selon l'une quelconque des revendications 1 à 8 pour la fabrication de corps moulés, de feuilles ou de fibres.

**10.** Corps moulés, feuilles ou fibres que l'on obtient en utilisant les masses à mouler selon l'une quelconque des revendications 1 à 8.

FIG.